# EUROPÄISCHE PATENTANMELDUNG

(11) **EP 2 495 378 A2**
(43) Veröffentlichungstag der Anmeldung: **05.09.2012**
(21) Anmeldenummer: 12157764.7
(22) Anmeldetag: 01.03.2012
(51) Int. Cl.: E04D 3/36, E04D 5/14

(54) **Befestigungssystem und Verfahren zum Abdichten an einer Fassade oder einem Flachdach**

(30) Priorität: 04.03.2011 DE 102011001114
(71) Anmelder: SFS intec Holding AG, 9435 Heerbrugg (CH)
(72) Erfinder: Korhonen, Tero, 73494 Strömsholm (SE)

(57) **Zusammenfassung**

Beschrieben sind ein Befestigungssystem (10) mit einer Tülle (11) und mit einem Befestiger (12), der einen zur Verankerung ausgebildeten Schaft (13) und einen Kopf (15) aufweist, zum Befestigen der Tülle (11) an einem festen Substrat (16) wie einer Fassade oder einem Flachdach eines Gebäudes. Außerdem ist ein Verfahren angegeben, zum Abdichten einer Verbindung zwischen dem Befestigungssystem (10) und dem Substrat (16). Die Tülle (11) weist eine Hülse (19) auf, in der ein Reservoir (26) gebildet ist, das an einem Ende durch die Unterseite des Kopfes (15) begrenzt ist und sich an einem anderen Ende in einem substratseitigen Endabschnitt (25) zu einer Kanüle (27) verengt. In das Reservoir (26) ist eine Dichtmasse (28) eingefüllt, so dass die Hülse (19) mit dem Befestiger (12) eine Injektionsspritze bildet, mit der durch das Setzen des Befestigers (12) die Dichtmasse (28) auf oder in oder unter das Substrat (16) applizierbar bzw. injizierbar ist. Bei dem Verfahren wird in einem ersten Schritt das Reservoir (26) mit der Dichtmasse (28) gefüllt. Dann wird in einem zweiten Schritt der Befestiger (12) mit an der Innenwand der Hülse (19) anliegendem Kopf (15) in die Hülse eingeführt, um die Injektionsspritze herzustellen. Schließlich wird in einem dritten Schritt der Befestiger (12') gesetzt und dadurch die Dichtmasse (28) appliziert und injiziert.

## Beschreibung

Die Erfindung betrifft ein Befestigungssystem mit einer Tülle und mit einem Befestiger, der einen zur Verankerung ausgebildeten Schaft und einen Kopf aufweist, zum Befestigen der Tülle an einem festen Substrat wie einer Fassade oder einem Flachdach eines Gebäudes durch Setzen des Befestigers, wobei die Tülle eine Hülse aufweist, in der sich ein Teil des Schaftes des Befestigers erstreckt.

Weiter betrifft die Erfindung ein Verfahren zum Abdichten einer Verbindung zwischen einem Befestigungssystem mit einer Tülle und einem Befestiger und einem festen Substrat wie einer Fassade oder einem Flachdach eines Gebäudes durch Setzen des Befestigers, wobei ein Befestiger eingesetzt wird, der einen zur Verankerung ausgebildeten Schaft und einen Kopf aufweist, und wobei eine Tülle eingesetzt wird, die eine Hülse aufweist, in der sich wenigstens ein Teil des Schaftes des Befestigers erstreckt.

Die Tülle hat an ihrem substratfernen Ende üblicherweise einen großflächigen Lastverteilteller, der an der Hülse angeformt oder befestigt ist. In letzterem Fall kann der Lastverteilteller aus einem anderen Werkstoff als die Hülse bestehen, also z.B. aus Metall, wenn die Hülse aus Kunststoff besteht. Die Tülle dient vorzugsweise zur Befestigung von Dämm- und Dichtungsmaterialien auf Flachdächern. Insbesondere bei Fassaden hat es sich gezeigt, dass an der Stelle, an welcher der Befestiger der Tülle in das feste Substrat eindringt, Abdichtungsprobleme auftreten. Bei einem aus dem Dokument DE 20 2010 005 905 U1 bekannten Befestigungssystem der eingangs genannten Art sind keine Maßnahmen zur Überwindung von solchen Problemen getroffen. Es geht bei diesem bekanntem Befestigungssystem hauptsächlich um die Ausbildung des Lastverteiltellers, der von Öffnungen durchsetzt ist, durch die sich die im Bereich des Lastverteiltellers überlappenden Dichtungsmaterialien beim Verschweißen verbinden, wobei die Öffnungen von Retentionselementen umgeben sind, welche sich in das unterhalb des Lastverteiltellers befindliche Dichtungsmaterial einkrallen.

Bei einem aus dem Dokument DE 43 19 054 A1 bekannten Kunststoffhalter, insbesondere für Dachbefestigungen, mit einem Einschraubkanal zur Aufnahme einer Befestigungsschraube, bei dem durch geeignete Mittel die Knicksicherheit, insbesondere bei Trittbelastung wesentlich erhöht ist, ist in dem Einschraubkanal des Kunststoffhalters eine durch die Einschraubbewegung der Befestigungsschraube aktivierte Schmelzsicherung eingelagert, welche durch eine plastische Verformung, bewirkt durch Erhitzung während der Einschraubbewegung, zu einer Verdickung der Kunststoffhalterwand im Bereich des den Einschraubkanal umgebenden Schaftes führt. Das Abdichtungsproblem, welches zwischen der Befestigungsschraube und dem Substrat sowie dem Kunststoffhalter besteht, wird dadurch nicht tangiert.

Wichtig ist im vorliegenden Zusammenhang die Angabe in diesem Dokument, dass beim Begehen des Flachdaches der Kunststoffhalter aus seiner Koaxialität zur Schraube nicht heraustreten soll, um die Hubfähigkeit zu erhalten, d.h. beim Betreten des Flachdaches vollzieht der Kunststoffhalter eine Hubbewegung derart, dass die in der Dachunterkonstruktion feststehende Schraube innerhalb des Hubkanals bzw. des Einschraubkanals geführt ist, ohne dabei über die Oberkante des Kunststoffhalters herauszustoßen. Es handelt sich bei diesem bekannten Kunststoffhalter also um einen sogenannten trittsicheren Halter, der unter einer Trittbelastung nachgeben und die vorgenannte Hubbewegung ausführen soll. Bei einem solchen Halter würden sich die eingangs erwähnten Abdichtungsprobleme an der Stelle, an welcher die Schraube in das feste Substrat eindringt, wegen Unzugänglichkeit dieser Stelle nicht beseitigen lassen.

Bei einem Kunststoffhalter nach dem Dokument DE 93 08 562 U1 ließen sich solche Abdichtungsprobleme auch nicht beseitigen, denn jede Dichtmasse an der genannten Stelle würde nach dem Setzen der Schraube die Hubbewegung des Kunststoffhalters auf der Schraube behindern oder vermutlich gänzlich verhindern.

Dieses Dokument befasst sich hautsächlich mit einem mit einer unverlierbaren Schraube vormontierbaren Kunststoffhalter. Bei der manuellen Befestigung von Dämm- und Dichtschichten mit solchen Kunststoffhaltern stellt die Bestückung des Kunststoffhalters mit der Schraube einen nicht unbeträchtlichen Arbeitsaufwand dar. Deshalb erfolgt die Bestückung des Kunststoffhalters mit der Schraube werksseitig, weil sich sonst auf der Baustelle zum Verarbeitungszeitpunkt eine nicht unerhebliche Anzahl von Schrauben aus dem Kunststoffhalter gelöst haben wird, da diese nur locker in den Einschraubkanal eingeführt sind und gegen Herausfallen nicht geschützt sind.

Dafür ist in oder am Einschraubkanal des Kunststoffhalters ein Rückhaltemittel vorgesehen, welches entweder zwischen die Gewindeflanken der Schraube eingreift oder auf diese pressend wirkt. Zwischen dem Kopf der Schraube und der Innenwand des Einschraubkanals ist keine gegenseitige Anpassung vorhanden, sondern eine reichlich bemessene Spielpassung.

Aus dem Dokument DE 200 22 311 U1 ist ein Kunststoffhalter bekannt, der sich von dem Kunststoffhalter nach dem vorgenannten Dokument DE 93 08 562 U1 nur durch einen zusätzlichen Dübelvorsatz unterscheidet.

Aus dem Dokument DE 200 22 639 U1 ist ein Verbundanker bekannt, mit dem sich eine Abdichtung zwischen einer Tülle, einem Befestiger und einem festen Substrat, insbesondere einer Fassade eines Gebäudes, nicht auf einfache Weise erzielen ließe. Dieses Dokument befasst sich mit dem Problem, dass Kunststoffspreizdübel in leichten Baustoffen mit hohen Wärmedämmwerten nur bedingt anwendbar sind. Zur Behebung dieses Problems dient der Verbundanker, mit dem eine Stoffschlussverbindung eines Befestigungselementes in einem Bohrloch hergestellt wird. Dafür wird ein Ein- oder Mehrkomponentenharz in einer Patrone verwendet, die in das Bohrloch eingesetzt wird. Bei dem Eindrehen einer Schraube tritt dann das Komponentenharz in Form eines Isolierschaums unter Volumenvergrößerung aus, um das Bohrloch und entsprechende Hohlräume auszufüllen und die Stoffschlussverbindung der Schraube unten in dem Bohrloch und um das Bohrloch herum in dem Mauerwerk herzustellen, in welches der Isolierschaum expandieren kann. An einer Übergangsstelle zwischen einem Dübelflansch und einer Wärmeplatte auf der Wand erfolgt keine Abdichtung mit dem Isolierschaum, weil eine Injektionspatrone in dem Kunststoffdübel bereits im Dübelfuß enthalten ist, wenn der Dübel in ein Bohrloch eingesetzt wird.

Aus dem Dokument DE 35 39 752 A1 ist eine Dachbefestigung bekannt, die aus einer Schraube oder einem Nagel sowie einem mehrteiligen Halter besteht. Dadurch soll unterschiedlichen Dicken einer Dachkonstruktion durch Auswechslung einzelner Halterteile Rechnung getragen werden können. Eine Wärmedämmschicht und eine darauf angeordnete Abdichtungsbahn, die auf einer Dachunterkonstruktion aufliegen, werden durch eine solche Dachbefestigung gehalten, welche aus einer Schraube, einem Schaft und einem metallischen Halterkopf besteht. Letzterer hat die Form eines länglichen, an den Enden abgerundeten Deckels. Der Schaft des Halters besteht aus Kunststoff und ist mit einer Armierung aus Draht versehen. Bei unterschiedlich dicken Dachkonstruktionen wird an Stelle des Schaftes ein Schaft mit kürzerer oder größerer Länge verwendet. Bei dieser Dachbefestigung ist das Problem einer Abdichtung zwischen der Schraube oder dem Nagel und dem Unterbau nicht gelöst.

Der vorstehend geschilderte Stand der Technik bietet auch kein Verfahren zum Abdichten einer Verbindung zwischen einem Befestigungssystem und einem festen Substrat wie einer Fassade eines Gebäudes.

Aufgabe der Erfindung ist es, ein Befestigungssystem und ein Verfahren der eingangs genannten Art zu schaffen, mit denen sich auf einfache Weise eine Abdichtung zwischen der Tülle, einem Befestiger und einem festen Substrat, insbesondere einer Fassade eines Gebäudes, erzielen lässt.

Diese Aufgabe ist ausgehend von einem Befestigungssystem der eingangs genannten Art dadurch gelöst, dass die Hülse einen inneren Durchmesser hat, der kleiner als der oder höchstens gleich dem Durchmesser des Kopfes ist, so dass in der Hülse in einem den wenigstens einen Teil des Schaftes des Befestigers umgebenden Bereich ein Reservoir gebildet ist, das an einem Ende durch die Unterseite des Kopfes begrenzt und durch den Kopf an einer Innenwand der Hülse abgedichtet ist und sich an einem anderen Ende in einem substratseitigen Endabschnitt der Hülse zu einer Kanüle oder einer kanülenartigen Öffnung verengt, so dass durch die Hülse, den Befestiger, dessen Kopf und das Reservoir eine Art Injektionsspritze gebildet ist, wobei eine in das Reservoir einfüllbare oder eingefüllte Dichtmasse durch das Setzen des Befestigers auf oder in oder unter das Substrat applizierbar bzw. injizierbar ist.

Ausgehend von einem Verfahren der eingangs genannten Art ist die Aufgabe erfindungsgemäß dadurch gelöst, dass in einem ersten Schritt ein Reservoir, das in der Hülse in einem den wenigstens einen Teil des Schaftes des Befestigers umgebenden Bereich gebildet ist, mit einer Dichtmasse gefüllt wird, dass in einem zweiten Schritt der Befestiger mit an einer Innenwand der Hülse anliegendem Kopf in die Hülse eingeführt wird, so dass die Hülse mit dem Befestiger eine Injektionsspritze bildet, und dass in einem dritten Schritt der Befestiger gesetzt und dadurch die Dichtmasse auf oder in oder unter das Substrat appliziert bzw. injiziert wird.

Wenn bei dem Befestigungssystem nach der Erfindung in das Reservoir eine Dichtmasse eingefüllt ist und der Befestiger in die Hülse eingesetzt ist, bildet die Hülse mit dem Befestiger eine Injektionsspritze, mit der durch das Setzen des Befestigers die Dichtmasse auf oder in oder unter das Substrat applizierbar bzw. injizierbar ist. Der Schritt des Einfüllen der Dichtmasse in das Reservoir und der Schritt des Einführens des Befestigers in die Hülse werden werksseitig ausgeführt, so dass der Benutzer ein Befestigungssystem zur Verfügung hat, das bei dem Setzen des Befestigers wie eine Injektionsspritze wirkt und an der gemeinsamen Verbindungsstelle zwischen Befestiger, Substrat und Tülle Dichtmasse zur Verfügung stellt, die für eine zuverlässige Abdichtung sorgt. Die Dichtmasse könnte auch eine Klebemasse sein, denn Klebemassen erfüllen üblicherweise auch eine Dichtfunktion. Dadurch, dass bei dem Befestigungssystem nach der Erfindung die Hülse einen inneren Durchmesser hat, der kleiner als der oder höchstens gleich dem Durchmesser des Kopfes ist, ist eine ausreichende Abdichtung zwischen dem Kopf des Befestigers und der Innenwand der Hülse bei dem Setzvorgang und damit die Injektion der Dichtmasse gewährleistet.

Eine geeignete Dichtmasse ist zum Beispiel BUTYL JOINT SEALANT 200 nach einem Datenblatt der Firma DAFA A/S vom 16.10.2001 (zu finden unter http://www.dafa-as.com/products/sealants/butyl 200 joint-sealant?opendocument). Bei diesem Beispiel einer geeigneten Dichtmasse handelt es sich um eine nicht aushärtende Dichtmasse für Dichtverbindungen, die in einem Bereich von Konstruktionen zum Abdichten verwendet wird, wo ein permanenter flexibler Klebstoff erforderlich ist.

Bei dem Verfahren nach der Erfindung wird in zwei Schritten, die wiederum werksseitig ausgeführt werden, das Reservoir in der Hülse mit einer Dichtmasse gefüllt und der Befestiger in die Hülse eingesetzt, so dass der Benutzer des Befestigungssystems eine Injektionsspritze für die Dichtmasse zur Verfügung hat, mit der durch das Setzen des Befestigers die Dichtmasse auf oder in oder unter das Substrat appliziert bzw. injiziert wird. Das erleichtert die Arbeiten beträchtlich, insbesondere an einer Fassade, denn die Abdichtung erfolgt gleichzeitig mit dem Setzen des Befestigers, ohne dass sich der Benutzer des Befestigungssystems um die Abdichtung selbst kümmern müsste.

Vorteilhafte Ausgestaltungen des Befestigungssystems und des Verfahrens nach der Erfindung bilden die Gegenstände der Unteransprüche.

In einer Ausgestaltung des Befestigungssystems nach der Erfindung ist der zur Verankerung ausgebildete Schaft mit einem Verankerungsgewinde versehen. Durch entsprechend langsames Eindrehen des Befestigers und bei entsprechender Wahl der Gewindesteigung lässt sich der Druck auf die Dichtmasse zum Applizieren oder Injizieren derselben fein dosiert aufbauen.

In einer weiteren Ausgestaltung des Befestigungssystems nach der Erfindung sind am Verankerungsgewinde Kerben dgl. so angebracht, dass sie den Transport der Dichtmasse unter Druck aus der Hülse unterstützen. Dabei kann die Dichtmasse unter Druck aus der Tülle leicht in Richtung einer Spitze oder Bohrspitze des Befestigers fließen.

In einer weiteren Ausgestaltung des Befestigungssystems nach der Erfindung ist der zur Verankerung ausgebildete Schaft wie der Schaft eines Nagels ausgebildet. Diese Ausgestaltung ist zweckmäßig, wenn der Setzvorgang schnell und unkompliziert ausgeführt werden soll.

In einer weiteren Ausgestaltung des Befestigungssystems nach der Erfindung besteht die Hülse aus einem elastisch nachgiebigen Material. In diesem Fall kann der innere Durchmesser der Hülse kleiner sein als der Durchmesser des Befestigerkopfes. In diesem Fall wird der Befestigerkopf bei dem Setzvorgang die Hülse vorübergehend auf seinen Durchmesser aufweiten und so für eine noch bessere Abdichtung während des Injektionsvorganges sorgen.

In einer weiteren Ausgestaltung des Befestigungssystems nach der Erfindung besteht die Hülse aus einem mechanisch dauerhaft verformbaren Material. Das Material kann z.B. Aluminium sein.

In einer weiteren Ausgestaltung des Befestigungssystems nach der Erfindung ist die Kanüle oder die kanülenartige Öffnung am Ende des substratseitigen Endabschnittes der Hülse mit einem Dichtelement verschlossen, das zur Bildung einer Austrittsöffnung für die Dichtmasse mittels des Befestigers und/oder mittels Druck geöffnet werden kann. In dieser Ausgestaltung kann die Kanüle oder kanülenartige Öffnung einen breiteren Durchlass für die Dichtmasse haben. Wenn der Befestiger gesetzt wird, wird durch den Druck, der dadurch über die Dichtmasse auf das Dichtelement ausgeübt wird, das Dichtelement geöffnet. Dieses Öffnen unter Druck kann zusätzlich oder stattdessen mit Hilfe des Befestigers erfolgen, der das Dichtelement beim Setzen durchbohrt.

In einer weiteren Ausgestaltung des Befestigungssystems nach der Erfindung hat die Kanüle oder kanülenartige Öffnung einen inneren Durchmesser, der mindestens gleich dem äußeren Durchmesser des zur Verankerung ausgebildeten Schaftes ist. Die genaue Wahl der Größe des inneren Durchmessers wird in Abhängigkeit von der Zähigkeit oder Fließfähigkeit der Dichtmasse gewählt werden.

In einer weiteren Ausgestaltung des Befestigungssystems nach der Erfindung ist die Hülse ein Rohr aus Kunststoff oder Aluminium. Die Ausbildung wird dabei so getroffen, dass das Rohr genügend druckfest ist, um nicht durch die Dichtmasse während des Setzens des Befestigers aufgeweitet zu werden.

In einer weiteren Ausgestaltung des Befestigungssystems nach der Erfindung weist die Hülse wenigstens in dem Bereich des Reservoirs eine größere Wanddicke als in einem Bereich außerhalb des Reservoirs auf. Dadurch wird gewährleistet, dass sich bei dem Setzvorgang des Befestiger ein hoher Druck aufbaut, der die Dichtmasse aus dem Reservoir drückt, wenn der Befestiger eingeschraubt wird.

In einer weiteren Ausgestaltung des Befestigungssystems nach der Erfindung ist der substratseitige Endabschnitt der Hülse axial kompressibel ausgebildet. Das ergibt eine gute Abdichtung um die Einschraubstelle des Befestigers auf dem Substrat. Diese Ausgestaltung ist anwendbar, wenn keine Notwendigkeit besteht, dass die Gesamtlänge der Hülse einen genauen Wert hat. Die Hülse, die mit ihrem substratseitigen Endabschnitt auf dem Substrat um die Einschraubstelle aufsitzt, sorgt für eine sichere Abdichtung an dem Substrat, so dass die Dichtmasse von der Oberseite des Substrats aus durch das Schraubenloch oder ein vorgebohrtes Loch geleitet wird.

In einer weiteren Ausgestaltung des Befestigungssystems nach der Erfindung sitzt der ungesetzte Befestiger mit der Unterseite seines Kopfes auf einem oberen Rand der Hülse auf und steht an seinem entgegengesetzten Ende aus der Kanüle oder kanülenartigen Öffnung hervor. Bei dem Setzen des Befestigers bewegt sich der Kopf unter Aufweitung der Hülse in diese hinein. Der Kopf kann aber, statt die Hülse aufzuweiten, diese auch an ihrem oberen Rand zunehmend verformen. Das aus der Kanüle oder kanülenartigen Öffnung hervorstehende Ende des Befestigers erleichtert das Setzen desselben an einer dafür vorgesehenen Stelle.

In einer weiteren Ausgestaltung des Befestigungssystems nach der Erfindung erweitert sich der Kopf des Befestigers an seiner Unterseite von dem Schaft aus nach oben hin konisch. Das erleichtert das vorübergehende oder dauerhafte Verformen der Hülse während des Setzvorgangs.

In einer weiteren Ausgestaltung des Befestigungssystems nach der Erfindung ist der substratseitige Endabschnitt der Hülse wenigstens auf einem Teil von seiner Länge als ein Dübel ausgebildet. Diese Ausgestaltung ermöglicht, die Dichtmasse bis zu einem gewissen Punkt innerhalb des Substrats zu leiten. Dafür ist der Dübel mit Löchern versehen. Unterschiedliche Längen des Dübels und eine unterschiedliche Platzierung der Löcher legen den exakten Einspritzpunkt innerhalb des Substrats fest.

In einer weiteren Ausgestaltung des Befestigungssystems nach der Erfindung ist der Dübel ein Quetschdübel. Das ermöglicht, den Dübel an der Unterseite des Substrats zusammen zu quetschen. Durch entsprechende Wahl der Lage der Löcher kann die austretende Dichtmasse an dieser Stelle konzentriert werden.

In einer Ausgestaltung des Verfahrens nach der Erfindung wird ein Befestiger eingesetzt, bei dem der zur Verankerung ausgebildete Schaft mit einem Verankerungsgewinde oder wie der Schaft eines Nagels ausgebildet ist. Dadurch werden die oben im Zusammenhang mit dem Befestigungssystem bereits geschilderten Vorteile erzielt.

In einer weiteren Ausgestaltung des Verfahrens nach der Erfindung wird vor dem Setzen des Befestigers in dem Substrat eine Sackbohrung mit einem Durchmesser hergestellt, der größer als der Außendurchmesser des zur Verankerung ausgebildeten Schaftes ist, aber kleiner als der Außendurchmesser des substratseitigen Endabschnittes der Hülse ist, die Hülse wird mit dem Ende des substratseitigen Endabschnittes um die Sackbohrung auf das Substrat aufgesetzt und dann wird der Befestiger gesetzt und die Dichtmasse in die Sackbohrung injiziert. Diese Ausgestaltung gewährleistet, dass der Befestiger im Bereich der Einschraubstelle in dem Substrat ausreichend abgedichtet wird.

In einer weiteren Ausgestaltung des Verfahrens nach der Erfindung wird vor dem Setzen des Befestigers die Hülse mit dem Ende ihres substratseitigen Endabschnittes auf das Substrat aufgesetzt und dann wird der Befestiger gesetzt und die Dichtmasse in einem Bereich zwischen dem substratseitigen Endabschnitt der Hülse und einem benachbarten Bereich des Substrats um den Befestiger herum auf das Substrat appliziert. Diese Ausgestaltung gewährleistet eine ausreichende Abdichtung auch dann, wenn in dem Substrat keine Sackbohrung hergestellt wird, in die der substratseitige Endabschnitt der Hülse geführt werden könnte.

In einer weiteren Ausgestaltung des Verfahrens nach der Erfindung wird vor dem Setzen des Befestigers in dem Substrat eine Sackbohrung mit einem Durchmesser hergestellt, der größer als der Außendurchmesser des substratseitigen Endabschnittes der Hülse ist, dann wird die Hülse mit ihrem substratseitigen Endabschnitt so weit in die Sackbohrung eingeführt, dass ein Abstand zu dem Grund der Sackbohrung verbleibt, und schließlich wird der Befestiger gesetzt und die Dichtmasse aus einer Öffnung einer Kanüle am Ende des substratseitigen Endabschnittes der Hülse in die Sackbohrung injiziert. In dieser Ausgestaltung kann durch die Eindringtiefe der Hülse in dem Substrat die Sicherheit der Abdichtung je nach Anforderung gewährleistet werden.

In einer weiteren Ausgestaltung des Verfahrens nach der Erfindung wird vor dem Setzen des Befestigers in dem Substrat eine Durchgangsbohrung mit einem Durchmesser hergestellt, der wenigstens gleich dem Außendurchmesser des substratseiteigen Endabschnittes der Hülse ist, die Hülse, bei der der substratseitige Endabschnitt ab einer Schulter der Hülse als ein Dübel ausgebildet ist, wird mit ihrem substratseitigen Endabschnitt in die Durchgangsbohrung eingeführt, bis sie mit der Schulter auf dem Substrat um die Durchgangsbohrung aufsitzt, und dann wird der Befestiger gesetzt und die Dichtmasse durch wenigstens ein Durchgangsloch in dem Dübel in die Durchgangsbohrung und zwischen den Dübel und das Substrat in injiziert. Das gewährleistet eine bessere Halterung der Tülle und eine zuverlässigere Abdichtung derselben.

In einer weiteren Ausgestaltung des Verfahrens nach der Erfindung wird als Dübel ein Quetschdübel eingesetzt, der in einem Bereich, in dem er unterhalb des Substrates zusammenquetschbar ist, mit dem wenigstens einen Durchgangsloch versehen ist. Durch geeignete Wahl des Durchgangsloches oder der Durchgangslöcher lässt sich die Dichtmasse an eine geeignete Stelle in dem Substrat leiten.

In einer weiteren Ausgestaltung des Verfahrens nach der Erfindung wird vor dem Setzen des Befestigers in dem Substrat eine Sackbohrung mit einem Durchmesser hergestellt, der größer als der Außendurchmesser des substratseitigen Endabschnittes der Hülse ist, dann wird die Hülse mit ihrem substratseitigen Ende soweit in die Sackbohrung eingeführt, dass ein Abstand zu dem Grund der Sackbohrung verbleibt, und dann wird der Befestiger gesetzt und die Dichtmasse aus wenigstens einem in einer Seitenwand des substratseitigen Endabschnittes der Hülse gebildeten radialen Durchgangsloch in die Sackbohrung injiziert. Diese Ausgestaltung gewährleistet wiederum durch passende Wahl der Lage der radialen Öffnung oder Öffnungen, dass die Dichtmasse zu einem bestimmten Ort innerhalb des Substrats geleitet werden kann.

In einer weiteren Ausgestaltung des Verfahrens nach der Erfindung wird eine Tülle mit einer Hülse eingesetzt, die in Bezug auf den Durchmessers des Kopfes des Befestigers so ausgebildet ist, dass bei dem Setzen des Befestigers die Länge der Hülse reduziert wird. Diese Ausgestaltung ermöglicht, die Höhe der Tülle durch das Setzen zu verringern, trotzdem aber eine gute Abdichtung zu erzielen.

In einer weiteren Ausgestaltung des Verfahrens nach der Erfindung wird eine Tülle mit einer Hülse eingesetzt, die in Bezug auf den Durchmesser des Kopfes so ausgebildet ist, dass bei dem Setzen des Befestigers der Kopf in der Bohrung der Hülse in Richtung zu dem substratseitigen Ende bewegt wird. In diesem Fall bleibt die Höhe der Tülle erhalten, was zweckmäßig ist, wenn diese zur Befestigung von Dämmstoffschichten auf dem Substrat eingesetzt wird.

In einer weiteren Ausgestaltung des Verfahrens nach der Erfindung wird bei dem Setzen des Befestigers die injizierte Dichtmasse von der Sackbohrung aus in einem Bereich zwischen dem Ende des substratseitigen Endabschnittes der Hülse und einem benachbarten Bereich des Substrats um den Befestiger herum auf das Substrat appliziert. Das gewährleistet eine gute Abdichtung der Tülle an einem Substrat, in das die Tülle nicht eingeführt zu werden braucht. Ausführungsbeispiele der Erfindung werden im Folgenden unter Bezugnahme auf die Zeichnungen näher beschrieben.

Es zeigt:
- Fig.1: in einer Längsschnittansicht eine erste Ausführungsform eines Befestigungssystems nach der Erfindung,
- Fig. 2: in einer Längsschnittansicht eine zweite Ausführungsform des Befestigungssystems nach der Erfindung vor dem Setzen (Fig.2a) und nach dem Setzen (Fig. 2b),
- Fig. 3: in einer Längsschnittansicht eine dritte Ausführungsform des Befestigungssystems nach der Erfindung vor dem Setzen (Fig. 3a) und nach dem Setzen (Fig. 3b),
- Fig. 4: in einer Längsschnittansicht eine vierte Ausführungsform des Befestigungssystems nach der Erfindung vor dem Setzen (Fig.4a) und nach dem Setzen (Fig. 4b),
- Fig. 5: in einer Längsschnittansicht eine fünfte Ausführungsform des Befestigungssystems nach der Erfindung vor dem Setzen (Fig. 5a) und nach dem Setzen (Fig. 5b),
- Fig. 6: in einer Längsschnittansicht eine sechste Ausführungsform des Befestigungssystems nach der Erfindung vor dem Setzen (Fig. 6a) und nach dem Setzen (Fig. 6b),
- Fig. 7: in einer Längsschnittansicht eine siebte Ausführungsform des Befestigungssystems nach der Erfindung vor dem Setzen (Fig.7a) und nach dem Setzen (Fig. 7b) und
- Fig. 8: in einer Längsschnittansicht eine achte Ausführungsform des Befestigungssystems nach der Erfindung vor dem Setzen (Fig. 8a) und nach dem Setzen (Fig. 8b).

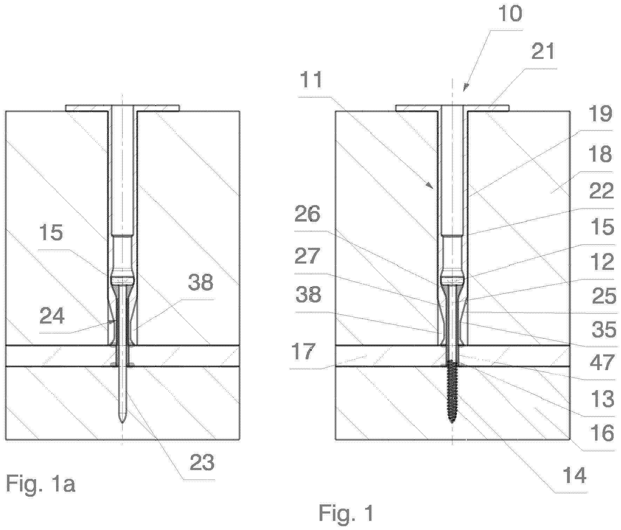

Fig. 1 zeigt in einer Längsschnittansicht eine erste Ausführungsform eines Befestigungssystems nach der Erfindung, das insgesamt mit 10 bezeichnet ist. Das Befestigungssystem 10 umfasst eine insgesamt mit 11 bezeichnete Tülle und einen insgesamt mit 12 bezeichneten Befestiger. Der Befestiger 12 hat einen zur Verankerung ausgebildeten Schaft 13, welcher bei der gezeigten ersten Ausführungsform mit einem Verankerungsgewinde 14 versehen ist. Statt des Befestigers 12 mit dem Verankerungsgewinde 14 könnte auch ein Befestiger 24 eingesetzt werden, bei dem der zur Verankerung ausgebildete Schaft 23 wie der Schaft eines Nagels ausgebildet ist, wie es in Fig. 1a gezeigt ist.

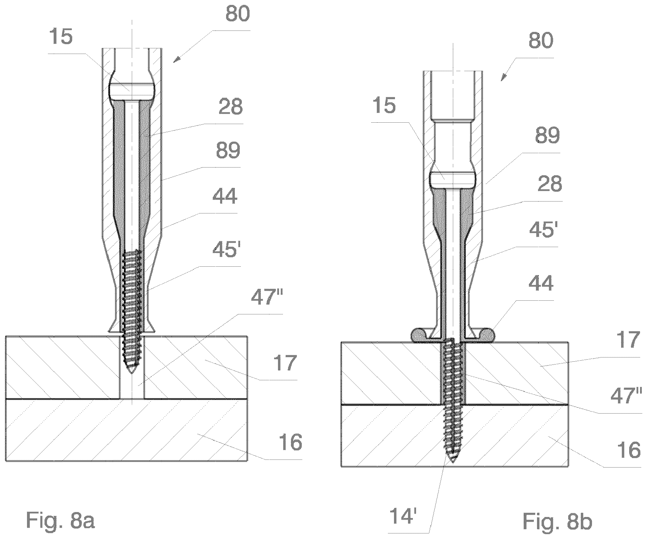

Der Befestiger 12 und der Befestiger 24 haben jeweils einen kolbenartig ausgebildeten Kopf 15. Der Kopf 15 des Befestigers 12 hat an seiner Oberseite einen lediglich in Fig. 8a sichtbaren Innenwerkzeugangriff, z.B. einen Innensechskant- oder Torx-Angriff, mit dem ein entsprechend ausgebildetes Drehwerkzeug in Eingriff bringbar ist, um die Tülle 11 an einem festen Substrat 16 zu befestigen, bei dem es sich um eine Fassade oder ein Flachdach eines Gebäudes handeln kann. In dem in Fig. 1 gezeigten Ausführungsbeispiel ist das Substrat 16 mit einer Deckschicht 17 versehen. Die Tülle 11 dient zum Befestigen einer Dämmstoffschicht 18 an dem Substrat 16. Die Tülle 11 weist eine Hülse 19 auf, durch die sich der Befestiger 12 mit dem oberen Teil seines Schaftes 13 erstreckt. In dem in Fig. 1 dargestellten Ausführungsbeispiel ist der Befestiger 12 bereits gesetzt. Die Tülle 11 weist eine Hülse 19 auf und ist an einem substratfernen Ende mit einem großflächigen Teller 21 versehen, der in dem gezeigten gesetzten Zustand auf der oberen Fläche der Dämmstoffschicht 18 aufliegt. In der Hülse 19 ist in einem in Fig. 1 unteren Bereich zwischen einer Schulter 22 und einem substratseitigen Endabschnitt 25 der Hülse 19 ein Reservoir 26 gebildet, das an einem Ende, welches dem Teller benachbart ist, durch die Unterseite des Kopfes 15 begrenzt ist und sich am entgegengesetzten Ende in dem substratseitigen Endabschnitt 25 der Hülse zu einer Kanüle 27 verengt.

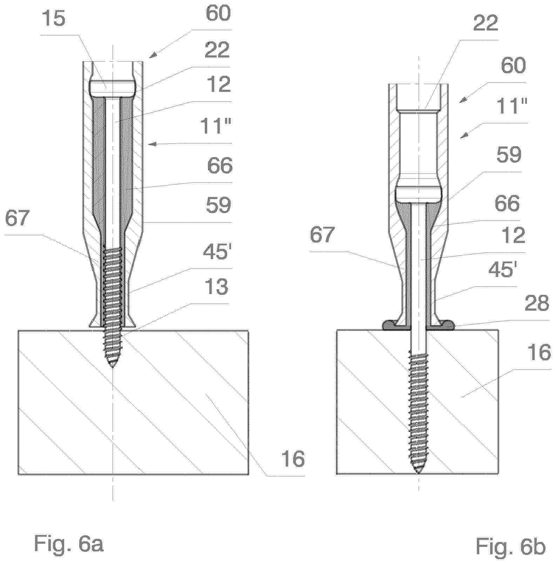

Ein ähnlicher Befestiger ist in Fig. 6a in einem ungesetzten Zustand gezeigt. In diesem Fall befindet sich der Kopf 15 mit seiner Unterseite auf der Schulter 22. In Fig. 6a reicht ein Reservoir 66 bis zu einem substratseitigen Ende einer Tülle 11" eines in Fig. 6 gezeigten Befestigungssystems 60. In das Reservoir 66 ist eine Dichtmasse 28 eingefüllt, so dass eine Hülse 69 mit dem Befestiger 12 eine Art Injektionsspritze bildet, mit der durch das Setzen des Befestigers 12 die Dichtmasse 28 auf oder in oder unter das Substrat 16 applizierbar bzw. injizierbar ist. Der gesetzte Zustand des Befestigers 12 ist in Fig. 6b gezeigt. Dieser Setzzustand entspricht dem in Fig. 1 gezeigten Zustand des Befestigers 12. Es ist zu erkennen, dass mit dem Eindrehen des Befestigers 12 in das Substrat 16 die Dichtmasse 28 durch den von dem Kopf 15 des Befestigers 12 ausgeübten Druck in Fig. 6b auf das Substrat 16 appliziert und in Fig. 1 in die Zwischenschicht 17 injiziert worden ist, um die Eintrittsstelle des Befestigers in das Substrat 16 und die Zwischenschicht 17 abzudichten. Das Befestigungssystem 10 wird ebenso wie das Befestigungssystem 60 in dem in Fig. 6a gezeigten Zustand geliefert. Die Hülse 19 oder 69 besteht aus einem elastisch nachgiebigen Material, wie es in den Fig. 1 und 6 gezeigt ist, oder aus einem mechanisch dauerhaft verformbaren Material, wie z.B. Aluminium, was weiter unten noch näher erläutert ist.

Unterhalb der Schulter 22 ist die Wanddicke der Hülse 19 dem hohen Druck angepasst, d.h. größer als in dem Bereich oberhalb der Schulter 22. In dem substratseitigen Endabschnitt 35 ist im Bereich der Kanüle 27 die Wand der Hülse 19 außen mit mehreren radialen Verstärkungsrippen 38 versehen, die gleichmäßig über den Umfang der Hülse 19 verteilt angeordnet sind (in Fig. 1 sind zwei Verstärkungsrippen 38 sichtbar).

Die Kanüle 27 oder 67 hat einen inneren Durchmesser, der mindestens gleich dem äußeren Durchmesser des zur Verankerung ausgebildeten Schaftes 13 ist. In den in den Fig. 1 und 6 gezeigten Ausführungsbeispielen ist der innere Durchmesser der Kanüle 27 oder 67 größer als der äußere Durchmesser des zur Verankerung ausgebildeten Schaftes 13. Die Festlegung, um wieviel der innere Durchmesser der Kanüle 27, 67 größer als der äußere Durchmesser des zur Verankerung ausgebildeten Schaftes 13 ist, richtet sich nach der Konsistenz der in das Reservoir 26 oder 66 eingefüllten Dichtmasse 28.

Die Hülse 19 oder 69 hat einen inneren Durchmesser, der kleiner ist als der und höchstens gleich dem Durchmesser des Kopfes 15 ist. In den Fig. 1 und 6 ist der innere Durchmesser der Hülse 19 oder 69 kleiner als der Durchmesser des Kopfes 15. Bei dem Setzen des Befestigers 12 wird daher die Hülse 19 oder 69 elastisch verformt, sobald der Kopf 15 die Schulter 22 passiert hat und sich in dem Reservoir in Richtung zu dem substratseitigen Ende der Hülse bewegt. Der Kopf 15 sorgt so für eine gute Abdichtung zwischen sich und der Innenwand der Hülse 19 oder 69.

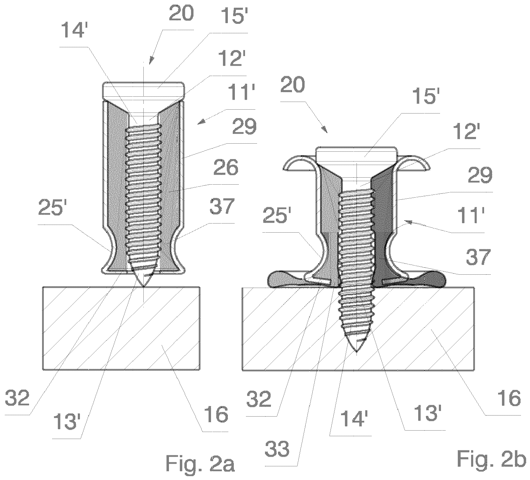

Fig. 2 zeigt in einer Längsschnittansicht eine zweite Ausführungsform eines erfindungsgemäßen Befestigungssystems, das insgesamt mit 20 bezeichnet ist. Fig. 2a zeigt das Befestigungssystem 20 vor dem Setzen, wohingegen Fig. 2b das Befestigungssystem 20 nach dem Setzen zeigt. Das Befestigungssystem 20 weist nur eine Hülse 29 auf, nicht aber den Teller 21. Statt der Kanüle 27, wie sie das Befestigungssystem 10 oder 60 aufweist, hat das Befestigungssystem 20 an dem substratseitigen Ende der Hülse 29 lediglich eine kanülenartige Öffnung 37, welche zwischen dem Schaft 13 und einem eingezogenen substratseitigen Endabschnitt 25' der Hülse 29 gebildet ist. Die kanülenartige Öffnung 37 ist am Ende des substratseitigen Endabschnittes 25' der Hülse 29 mit einem Dichtelement 32 verschlossen, das mit dem Befestiger 12 und/oder Druck geöffnet werden kann. In Fig. 2b ist das Dichtelement 32 mit einer Austrittsöffnung 33 gezeigt, nachdem diese durch den Befestiger 12 und durch von einem Kopf 15' auf die Dichtmasse 28 ausgeübten Druck gebildet worden ist. Sowohl in dem ungesetzten Zustand nach Fig. 2a als auch in dem gesetzten Zustand nach Fig. 2b hat die kanülenartige Öffnung 37 einen inneren Durchmesser, der hier größer als der äußere Durchmesser des zur Verankerung ausgebildeten Schaftes 13' ist.

Der Kopf 15' des Befestigers 12' erweitert sich an seiner Unterseite von dem Schaft 13' aus nach oben hin konisch. In dem ungesetzten Zustand nach Fig. 2a sitzt der Befestiger 12' mit der Unterseite seines Kopfes 15' auf einem oberen Rand der Hülse 29 auf und steht an seinem entgegengesetzten Ende etwas aus der kanülenartigen Öffnung 37 hervor. Bei dem Setzen des Befestigers 12' wird ein oberer Rand der Hülse 29 nach außen verformt oder gerollt, wie es in Fig. 2b zu erkennen ist. Der Kopf 15' bewegt sich bei dem Setzen des Befestigers 12' in dichter Anlage an einem oberen inneren Rand der Hülse 29 in Richtung zu dem Substrat 16 und presst dabei die Dichtmasse 28 durch die kanülenartige Öffnung 37 nach außen, wobei die Dichtmasse 28 auf dem Substrat 16 appliziert wird und eine dichte Verbindung zwischen dem Substrat 16 und dem Befestiger 12' herstellt. Statt aus Aluminium könnte die Hülse 29 des Befestigungssystems 20 auch aus einem Kunststoffmaterial oder einem anderen Metall bestehen, das mechanisch dauerhaft verformbar ist.

Die Hülse 19 oder 69 hat wenigstens in dem Bereich des Reservoirs 26 bzw. 66 eine größere Wanddicke als in einem Bereich außerhalb des Reservoirs, wie es in den Fig. 2 und 6 zu erkennen ist. Der Innendurchmesser des Reservoirs ist in dem Bereich unterhalb der Schulter 22 an den Durchmesser des Kopfes 15 angepasst, so dass sich der Kopf 15, 15' des Befestigers wie ein Kolben verhält. Der inneren Hülsendurchmesser und der daran angepasste Kopfdurchmesser ermöglichen, dass bei dem Setzen des Befestigers 12, 12' ein hoher Druck auf die Dichtmasse 28 ausgeübt wird, wenn sich der Befestiger in Richtung zu dem Substrat 16 bewegt und in das Substrat 16 eingeschraubt wird. Der substratseitige Endabschnitt 25, 25' der Hülse 19, 69 bildet eine Düse, welche die Dichtmasse zu der richtigen Stelle leitet. Die Dichtmasse wird in Fig. 1 durch eine Bohrung größeren Durchmessers in der Zwischenschicht 17 hindurchgequetscht und dabei auf die Zwischenschicht appliziert und unter die Zwischenschicht 17 injiziert, wie es in Fig. 1 zu erkennen ist. Dadurch wird eine sichere Abdichtung erzielt. Die Düse der Tülle 11, welche in Fig. 6 das Substrat 16 nicht berührt, sorgt dafür, dass die Dichtmasse auf der oberen Fläche des Substrats 16 um die Stelle herum, an welcher der Befestiger 12 in das Substrat 16 eindringt, sicher abdichtet.

Der substratseitige Endabschnitt 25 der Hülse 19 kann axial kompressibel ausgebildet sein, um einen guten Kontakt zwischen der Hülse 19 und der oberen Seite der Zwischenschicht 17 herzustellen, wenn der Befestiger 12 gesetzt wird. Die Kompressibilität kann durch geeignete Wahl des Werkstoffes der Hülse 19 erzielt werden oder z.B. durch eine faltenbalgartige Ausbildung des unteren Endes des substratseitigen Endabschnittes 25. Eine kompressible Hülse kann dort eingesetzt werden, wo es nicht notwendig ist, dass die Hülse 19 eine exakte Gesamtlänge hat. Der substratseitige Endabschnitt 25, der fest auf der Zwischenschicht 17 oder dem Substrat (nicht dargestellt) aufsitzt, leitet die Dichtmasse von der oberen Seite der Zwischenschicht aus durch das durch den Befestiger 12 geschaffene Einschraubloch oder durch ein vorgebohrtes Loch 47, wie es in Fig. 1 gezeigt ist, hindurch.

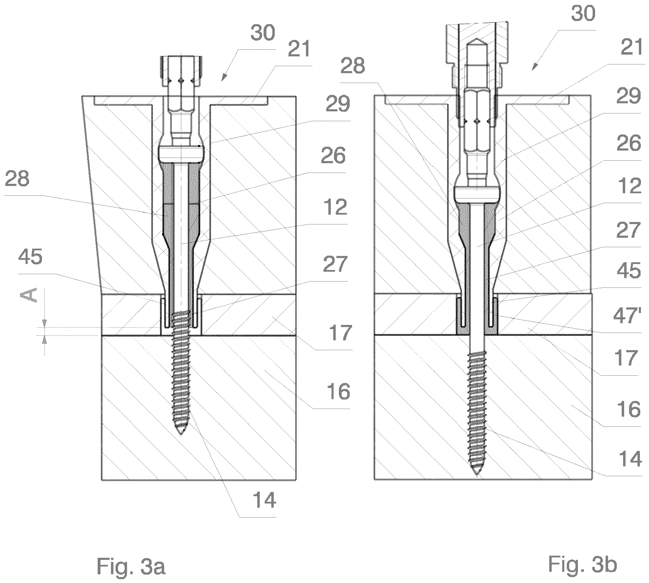

Fig. 3 zeigt in einer Längsschnittansicht eine dritte Ausführungsform eines Befestigungssystems nach der Erfindung, das insgesamt mit 30 bezeichnet ist, vor dem Setzen (Fig. 3a) und nach dem Setzen (Fig. 3b). Das Befestigungssystem 30 unterscheidet sich von dem Befestigungssystem 10 hauptsächlich dadurch, dass ein substratseitiger Endabschnitt einer Hülse 39 an seinem substratseitigen Ende einen wesentlich geringeren Außendurchmesser und damit auch eine wesentlich geringere Wandstärke aufweist. Der substratseitige Endabschnitt 35 ist so bei dem Setzen des Befestigungssystems 30 in ein vorgebohrtes Loch 47 einführbar, in welches die Dichtmasse 28 austreten kann. Das ist weiter unten noch näher erläutert.

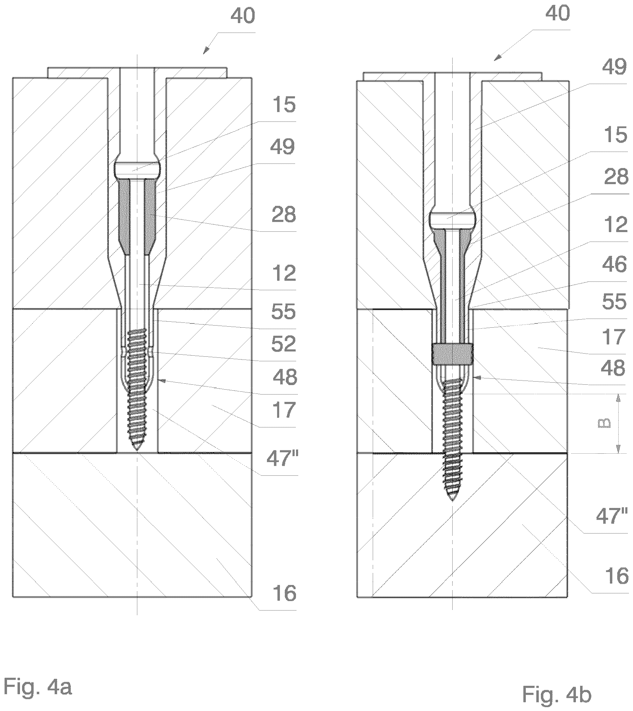

Fig. 4 zeigt in einer Längsschnittansicht eine vierte Ausführungsform eines erfindungsgemäßen Befestigungssystems nach der Erfindung, das insgesamt mit 40 bezeichnet ist, vor dem Setzen (Fig. 4a) und nach dem Setzen (Fig. 4b). Das Befestigungssystem 40 unterscheidet sich von dem Befestigungssystem 30 hauptsächlich dadurch, dass ein substratseitiger Endabschnitt 45 einer Hülse 49 auf einem Teil von seiner Länge als ein Dübel 48 ausgebildet ist. Mit dem Dübel 48 wird die Hülse 49 in eine in der Zwischenschicht 17 gebildete Sackbohrung 47" eingeführt, bis sie mit einer äußeren Schulter auf der Zwischenschicht 17 um die Sackbohrung 47" aufsitzt. Der Dübel 48 enthält ein enges Loch für den Befestiger 12 und ist mit einem Kranz von kleinen Durchgangslöchern 52 versehen. In diesem Fall kann die Dichtmasse 28 zu einem bestimmten Punkt innerhalb der Zwischenschicht 17 oder, wenn keine Zwischenschicht verwendet wird, zu einem Punkt des Substrats 16 geleitet werden. Durch unterschiedliche Längen des Dübels 48 und eine unterschiedliche Platzierung der Durchgangslöcher 52 wird die genaue Einspritzstelle innerhalb der Zwischenschicht 17 oder des Substrats 16 festgelegt. Fig. 4b zeigt den gesetzten Zustand, in welchem die Dichtmasse 28 aus den Durchgangslöchern 52 ausgetreten ist und die gewünschte Abdichtung innerhalb der Sackbohrung 47" hergestellt hat.

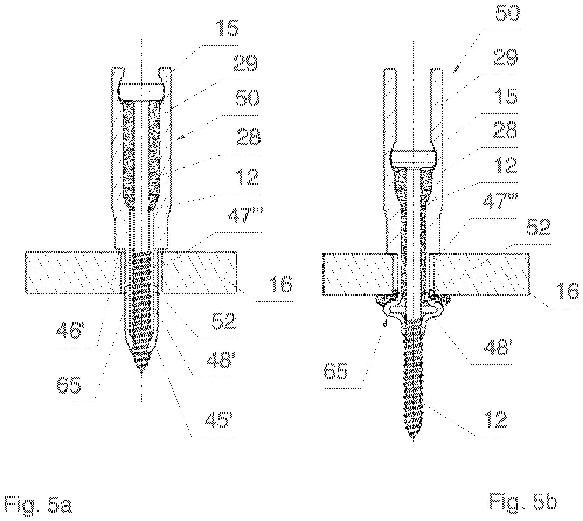

Fig. 5 zeigt in einer Längsschnittansicht eine fünfte Ausführungsform eines erfindungsgemäßen Befestigungssystems, das insgesamt mit 50 bezeichnet ist, vor dem Setzen (Fig. 5a) und nach dem Setzen (Fig. 5b). Der Übersichtlichkeit halber sind in dieser Darstellung (ebenso wie in den Darstellungen in den Fig. 6, 7 und 8) das obere, substratferne Ende der Tülle oder Hülse 59 mit dem Teller und die mit der Tülle zu befestigende Dämmstoffschicht weggelassen worden. Das Befestigungssystem 50 unterscheidet sich von dem Befestigungssystem 40 hauptsächlich dadurch, dass der Dübel in dem substratseitigen Endabschnitt 45' als ein Quetschdübel 48' ausgebildet und durch eine Durchgangsbohrung 47'" in dem Substrat 16 hindurchgeführt ist. Der Quetschdübel 48' ist ebenfalls mit einem Kranz von kleinen Durchgangslöchern 52 versehen. Diese sind zweckmäßig so angeordnet, dass die Dichtmasse 28 dort austritt, wo der Quetschdübel 48' unter dem Substrat 16 zusammengequetscht wird, wie es in Fig. 5b gezeigt ist.

Fig. 6 zeigt in einer Längsschnittansicht eine sechste Ausführungsform eines erfindungsgemäßen Befestigungssystems, das insgesamt mit 60 bezeichnet ist, vor dem Setzen (Fig. 6a) und nach dem Setzen (Fig. 6b). Der Aufbau des Befestigungssystems 60 ist weiter oben im Zusammenhang mit dem Befestigungssystem 10 nach Fig. 1 bereits beschrieben worden. Bei dem Setzen sitzt die Tülle 11" nicht auf der oberen Seite des Substrats 16 auf, so dass die Dichtmasse 28 um das Einschraubloch des Befestigers 12 in dem Substrat 16 aus der Kanüle 67 der Hülse 69 austreten und abdichten kann, wie es in Fig. 6b gezeigt ist.

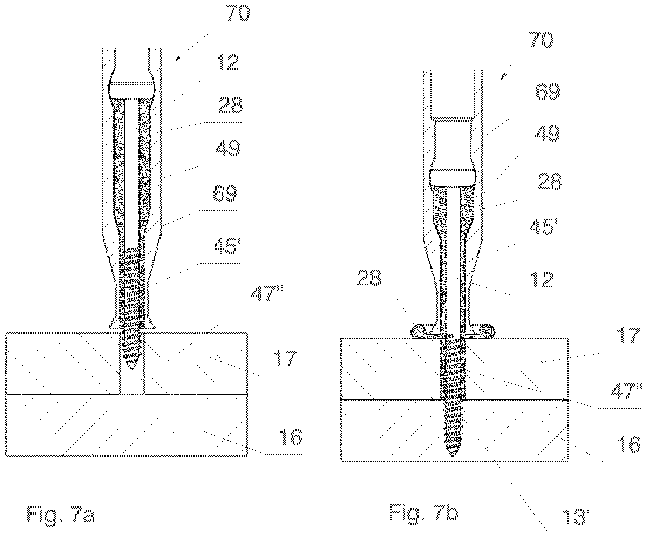

Fig. 7 zeigt in einer Längsschnittansicht eine siebte Ausführungsform eines erfindungsgemäßen Befestigungssystems, das insgesamt mit 70 bezeichnet ist, vor dem Setzen (Fig. 7a) und nach dem Setzen (Fig. 7b). Unterschiedlich ist gegenüber dem Befestigungssystem 60 hauptsächlich, dass vor dem Setzen in der Zwischenschicht 17 oder dem Substrat 16 eine Sackbohrung 47" hergestellt wird, in die bei dem Setzen die Dichtmasse 28 aus der Hülse 69 injiziert wird, so dass die Dichtmasse 28 nicht nur auf die obere Seite der Zwischenschicht 17 appliziert wird.

Fig. 8 zeigt in einer Längsschnittansicht eine achte Ausführungsform eines erfindungsgemäßen Befestigungssystems, das insgesamt mit 80 bezeichnet ist, vor dem Setzen (Fig. 8a) und nach dem Setzen (Fig. 8b). Das Befestigungssystem 80 unterscheidet sich von dem Befestigungssystem 60 oder 70 hauptsächlich dadurch, dass es ein Verankerungsgewinde 14' hat, an welchem eine im Querschnitt V-förmige Kerbe so angebracht ist, dass sie den Transport der Dichtmasse 28 unter Druck aus einer Hülse 89 unterstützt.

Im Folgenden wird nun ein Verfahren zum Abdichten einer Verbindung zwischen einem Befestigungssystem mit einer Tülle und einem Befestiger, wie sie vorstehend beschrieben worden sind, und einem festen Substrat, wie einer Fassade oder einem Flachdach eines Gebäudes näher beschrieben. Der Befestiger 12, 12' weist dabei in jedem Fall eine Hülse 19, 29, 39, 49, 59, 69 oder 89 auf, in der sich wenigstens ein Teil des Schaftes 13, 13' des Befestigers 12, 12' erstrecken kann oder erstreckt.

In einer ersten Variante des Verfahrens nach der Erfindung wird in einem ersten Schritt ein Reservoir 26 oder 66, das in der Hülse 19, 29,39, 49, 59, 69, 89 oder 59 in einem den wenigstens einen Teil des Schaftes 13, 13' des Befestigers 12, 12' umgebenden Bereich gebildet ist, mit einer Dichtmasse 28 gefüllt.

In einem zweiten Schritt wird der Befestiger 12, 12' mit an der Innenwand der Hülse 19, 29, 39, 49, 59, 69 oder 89 anliegendem Kopf 15 in die Hülse eingeführt, so dass die Hülse mit dem Befestiger 12, 12' eine Art Injektionsspritze bildet.

In einem dritten Schritt wird der Befestiger 12, 12' gesetzt und dadurch die Dichtmasse 28 auf oder in oder unter das Substrat 16 (oder die Zwischenschicht 17, falls vorhanden) appliziert bzw. injiziert.

In einer ersten Ausgestaltung des Verfahrens nach der Erfindung wird vor dem Setzen des Befestigers 12, 12' in dem Substrat 16 eine Sackbohrung 47, 47" mit einem Durchmesser hergestellt, der größer als der Außendurchmesser des zur Verankerung ausgebildeten Schaftes 13, 13', aber kleiner als der Außendurchmesser des substratseitigen Endabschnittes 25, 25' der Hülse 19, 49 ist.

Die Hülse 19, 29, 49, 69 oder 89 wird dann mit dem Ende des substratseitigen Endabschnittes 25, 25' um die Sackbohrung 47, 47" auf das Substrat aufgesetzt und anschließend wird der Befestiger 12, 12' gesetzt und die Dichtmasse 28 in die Sackbohrung 47" injiziert.

In einer zweiten Ausgestaltung des Verfahrens nach der Erfindung wird vor dem Setzen des Befestigers 12, 12' die Hülse 19, 29, mit dem Ende ihres substratseitigen Endabschnittes 35, 45 auf das Substrat 16 aufgesetzt.

Danach wird der Befestiger 12, 12' gesetzt und die Dichtmasse 28 in einem Bereich zwischen dem substratseitigen Endabschnitt 35, 45 der Hülse 19, 29 und einem benachbarten Bereich des Substrats 16 um den Befestiger 12, 12' herum auf das Substrat 16 appliziert.

In einer dritten Ausgestaltung des Verfahrens nach der Erfindung wird vor dem Setzen des Befestigers 12 in dem Substrat 16 eine Sackbohrung (Loch 47') mit einem Durchmesser hergestellt, der größer als der Außendurchmesser des substratseitigen Endabschnittes 35 der Hülse 39 ist.

Dann wird die Hülse 39 mit ihrem substratseitigen Endabschnitt 35 so weit in die Sackbohrung (Loch 47, 47') eingeführt, dass ein Abstand A zu dem Grund der Sackbohrung (Loch 47') verbleibt.

Schließlich wird der Befestiger 12 gesetzt und die Dichtmasse 28 aus der kanülenartigen Öffnung 37 am Ende des substratseitigen Endabschnittes 35 der Hülse 39 in die Sackbohrung (das Loch 47') injiziert.

In einer vierten Ausgestaltung des Verfahrens nach der Erfindung wird vor dem Setzen des Befestigers 12 in dem Substrat 16 eine Sackbohrung 47" mit einem Durchmesser hergestellt, der wenigstens gleich dem Außendurchmesser des substratseitigen Endabschnittes 55 der Hülse 49 ist.

Die Hülse 49, bei der der substratseitige Endabschnitt 55 ab einer Schulter 46 der Hülse 49 als ein Dübel 48 ausgebildet ist, wird dann mit ihrem substratseitigen Endabschnitt 55 in die Sackbohrung 47" eingeführt, bis sie mit der Schulter 46 auf dem Substrat 16 um die Sackbohrung 47" aufsitzt.

Schließlich wird dann der Befestiger 12 gesetzt und die Dichtmasse 28 durch den Dübel 48 in die Sackbohrung 47" injiziert.

In einer Weiterbildung der vierten Ausgestaltung des Verfahrens nach der Erfindung wird bei der Hülse 59 als Dübel 48 ein Quetschdübel 48' eingesetzt, der durch eine Durchgangsbohrung 47'" in dem Substrat 16 hindurchgeführt wird und in einem Bereich, in dem er unterhalb des Substrats 16 zusammenquetschbar ist, mit wenigstens einem Durchgangsloch 52 zum Austreten und Applizieren von Dichtmasse 28 versehen ist.

In einer fünften Ausgestaltung des Verfahrens nach der Erfindung wird vor dem Setzen des Befestigers in dem Substrat 16 eine Sackbohrung 47" mit einem Durchmesser hergestellt, der größer als der Außendurchmesser des substratseitigen Endabschnittes 55 der Hülse 49 ist.

Dann wird die Hülse 49 mit ihrem substratseitigen Endabschnitt so weit in die Sackbohrung 47" eingeführt, dass ein Abstand B zu dem Grund der Sackbohrung 47" verbleibt.

Dann wird der Befestiger 12 gesetzt und die Dichtmasse 28 aus wenigstens einem radialen Durchgangsloch 52 in einer Seitenwand des substratseitigen Endabschnittes 55 der Hülse 49 in die Sackbohrung 47" injiziert, wie es in den Fig. 4a und 4b gezeigt ist.

In einer Weiterbildung der zweiten Ausgestaltung des Verfahrens nach der Erfindung wird eine Tülle 11' mit einer Hülse 29 eingesetzt, die in Bezug auf den Durchmesser des Kopfes 15' des Befestigers 12' so ausgebildet ist, dass bei dem Setzen des Befestigers 12' die Länge der Hülse 29 reduziert wird, wie es in Fig. 2b gezeigt ist.

In einer sechsten Ausgestaltung des Verfahrens nach der Erfindung wird eine Tülle 11" mit einer Hülse 69 eingesetzt, die in Bezug auf den Durchmesser des Kopfes 15 des Befestigers 12 so ausgebildet ist, dass bei dem Setzen des Befestigers 12 der Kopf 15 in der Bohrung der Hülse 69 in Richtung zu dem substratseitigen Ende bewegt wird, wie es in den Fig. 6a und 6b gezeigt ist.

In einer siebten Ausgestaltung des Verfahrens nach der Erfindung wird bei dem Setzen des Befestigers 12 die injizierte Dichtmasse 28 von der Sackbohrung 47" aus in einem Bereich zwischen dem Ende des substratseitigen Endabschnittes 45' der Hülse 49 oder 89 und einem benachbarten Bereich des Substrats 16 um den Befestiger 12 herum auf das Substrat 16 appliziert, wie es in den Fig. 7a, 7b bzw. 8a und 8b gezeigt ist.

Wenn oben und in den Patentansprüchen von einer "Art Injektionsspritze" die Rede ist, so ist, wie die Zeichnungen zeigen, eine Injektionsspritze gemeint, bei welcher die zu injizierende oder applizierende Masse an der Öffnung der Spritze austritt, an der die Kolbenstange in den Spritzenkörper eintritt. Bei einer üblichen Spritze tritt die zu injizierende Flüssigkeit od. dgl. an einem zu der Kolbenstange entgegengesetzten Ende der Spritze aus dem Spritzenkörper aus, üblicherweise über eine Injektionsnadel. Man könnte in vorliegendem Fall statt von einer "Art Injektionsspritze" auch von einer "umgekehrten" oder "umgekehrt betriebenen Injektionsspritze" sprechen.

### Bezugszeichenliste

- 10: Befestigungssystem
- 11: Tülle
- 11': Tülle
- 11": Tülle
- 12: Befestiger
- 12': Befestiger
- 13: Schaft
- 13': Schaft
- 14: Verankerungsgewinde
- 14': Verankerungsgewinde
- 15: Kopf
- 15': Kopf
- 16: Substrat
- 17: Deckschicht
- 18: Dämmstoffschicht
- 19: Hülse
- 20: Befestigungssystem
- 21: Teller
- 22: Schulter
- 23: Schaft
- 24: Befestiger
- 25: substratseitiger Endabschnitt
- 25': substratseitiger Endabschnitt
- 26: Reservoir
- 27: Kanüle
- 28: Dichtmasse
- 29: Hülse
- 30: Befestigungssystem
- 32: Dichtelement
- 33: Austrittsöffnung
- 35: substratseitiger Endabschnitt
- 37: Kanülenartige Öffnung
- 39: Hülse
- 40: Befestigungssystem
- 44: Kerbe
- 45: Substratseitiger Endabschnitt
- 45': Substratseitiger Endabschnitt
- 46: Äußere Schulter
- 46': Äußere Schulter
- 47: Sackbohrung
- 47': Sackbohrung
- 47": Sackbohrung
- 47'": Durchgangsbohrung
- 48: Dübel
- 48': Quetschdübel
- 49: Hülse
- 50: Befestigungssystem
- 52: Durchgangsloch
- 55: Substratseitiger Endabschnitt
- 59: Hülse
- 60: Befestigungssystem
- 65: Substratseitiger Endabschnitt
- 66: Reservoir
- 67: Kanüle
- 69: Hülse
- 70: Befestigungssystem
- 80: Befestigungssystem
- 89: Hülse

## Patentansprüche

1. Befestigungssystem mit einer Tülle (11, 11', 11") und mit einem Befestiger (12, 12', 24), der einen zur Verankerung ausgebildeten Schaft (13, 13') und einen Kopf (15, 15') aufweist, zum Befestigen der Tülle (11, 11', 11") an einem festen Substrat (16) wie einer Fassade oder einem Flachdach eines Gebäudes durch Setzen des Befestigers (12, 12', 24), wobei die Tülle (11, 11', 11") eine Hülse (19, 29, 39, 49, 59, 69, 89) aufweist, in der sich wenigstens ein Teil des Schaftes (13, 13') des Befestigers (12, 12', 24) erstreckt,
**dadurch gekennzeichnet, dass** die Hülse (19, 29, 39, 49, 59, 69, 89) einen inneren Durchmesser hat, der kleiner als der oder höchstens gleich dem Durchmesser des Kopfes (15, 15') ist, so dass in der Hülse (19, 29, 39, 49, 59, 69, 89) in einem den wenigstens einen Teil des Schaftes (13, 13') des Befestigers (12, 12', 24) umgebenden Bereich ein Reservoir (26) gebildet ist, das an einem Ende durch die Unterseite des Kopfes (15, 15') begrenzt und durch den Kopf (15, 15') an einer Innenwand der Hülse (19, 29, 39, 49, 59, 69, 89) abgedichtet ist und sich an einem anderen Ende in einem substratseitigen Endabschnitt (25, 25', 45, 45') der Hülse (19, 29, 39, 49, 59, 69, 89) zu einer Kanüle (27, 67) oder einer kanülenartigen Öffnung (37) verengt, so dass durch die Hülse (19, 29, 39, 49, 59, 69, 89), den Befestiger (12, 12', 24), dessen Kopf (15, 15') und das Reservoir (26) eine Art Injektionsspritze gebildet ist, wobei eine in das Reservoir (26) einfüllbare oder eingefüllte Dichtmasse (28) durch das Setzen des Befestigers (12, 12', 24) auf oder in oder unter das Substrat (16) applizierbar bzw. injizierbar ist.

2. Befestigungssystem nach Anspruch 1, **dadurch gekennzeichnet, dass** der zur Verankerung ausgebildete Schaft (13) mit einem Verankerungsgewinde (14) versehen ist.

3. Befestigungssystem nach Anspruch 2, **dadurch gekennzeichnet, dass** am Verankerungsgewinde (14) wenigstens eine Kerbe (44) so angebracht ist, dass sie den Transport der Dichtmasse (28) unter Druck aus der Hülse (89) unterstützt.

4. Befestigungssystem nach Anspruch 1, **dadurch gekennzeichnet, dass** der zur Verankerung ausgebildete Schaft wie der Schaft (23) eines Nagels ausgebildet ist.

5. Befestigungssystem nach einem der Ansprüche 1 bis 4, **dadurch gekennzeichnet, dass** die Hülse (19, 29, 39, 49, 59, 69, 89) aus einem elastisch nachgiebigen Material besteht.

6. Befestigungssystem nach einem der Ansprüche 1 bis 4, **dadurch gekennzeichnet, dass** die Hülse (29) aus einem mechanisch dauerhaft verformbaren Material besteht.

7. Befestigungssystem nach einem der vorhergehenden Ansprüche, **dadurch gekennzeichnet, dass** die Kanüle (27) oder die kanülenartige Öffnung (37) am Ende des substratseitigen Endabschnittes (25') der Hülse (29) mit einem Dichtelement (32) verschlossen ist, das zur Bildung einer Austrittsöffnung (33) für die Dichtmasse (28) mit dem Befestiger (12') und/oder Druck geöffnet werden kann.

8. Befestigungssystem nach einem der vorhergehenden Ansprüche, **dadurch gekennzeichnet, dass** die Kanüle (27) oder kanülenartige Öffnung (37) einen inneren Durchmesser hat, der mindestens gleich dem äußeren Durchmesser des zur Verankerung ausgebildeten Schaftes (13, 13') ist.

9. Befestigungssystem nach Anspruch 6, **dadurch gekennzeichnet, dass** die Hülse (19, 29, 39, 49, 59, 69, 89) ein Rohr aus Kunststoff oder Aluminium ist.

10. Befestigungssystem nach einem der vorhergehenden Ansprüche, **dadurch gekennzeichnet, dass** die Hülse (19, 69) wenigstens in dem Bereich des Reservoirs (26) eine größere Wanddicke als in einem Bereich außerhalb des Reservoirs (26) aufweist.

11. Befestigungssystem nach einem der vorhergehenden Ansprüche, **dadurch gekennzeichnet, dass** der substratseitige Endabschnitt (45') der Hülse (59) axial kompressibel ausgebildet ist.

12. Befestigungssystem nach Anspruch 6, **dadurch gekennzeichnet, dass** der ungesetzte Befestiger (12') mit der Unterseite seines Kopfes (15') auf einem oberen Rand der Hülse (29) aufsitzt und an seinem entgegengesetzten Ende aus der Kanüle (27) oder kanülenartigen Öffnung (37) hervorsteht.

13. Befestigungssystem nach Anspruch 9 oder 12, **dadurch gekennzeichnet, dass** sich der Kopf (15') des Befestigers (12') an seiner Unterseite von dem Schaft (13') aus nach oben hin konisch erweitert.

14. Befestigungssystem nach Anspruch 11, **dadurch gekennzeichnet, dass** der substratseitige Endabschnitt (45', 55) der Hülse (49, 59) wenigstens auf einem Teil von seiner Länge als ein Dübel (48, 48') ausgebildet ist.

15. Befestigungssystem nach Anspruch 15, **dadurch gekennzeichnet, dass** der Dübel ein Quetschdübel (48') ist.

16. Verfahren zum Abdichten einer Verbindung zwischen einem Befestigungssystem (10) mit einer Tülle (11, 11', 11") und einem Befestiger (12, 12', 24) nach einem der vorhergehenden Ansprüche und einem festen Substrat (16) wie einer Fassade oder einem Flachdach eines Gebäudes durch Setzen des Befestigers,
wobei ein Befestiger eingesetzt wird, der einen zur Verankerung ausgebildeten Schaft (13, 13') und einen Kopf (15, 15') aufweist, und
wobei eine Tülle (11, 11', 11") eingesetzt wird, die eine Hülse (19, 29, 39, 49, 59, 69, 89) aufweist, in der sich wenigstens ein Teil des Schaftes (13, 13') des Befestigers (12, 12', 24) erstreckt,
**dadurch gekennzeichnet, dass** in einem ersten Schritt ein Reservoir (26), das in der Hülse (19, 29, 39, 49, 59, 69, 89) in einem den wenigstens einen Teil des Schaftes (13, 13') des Befestigers (12, 12', 24) umgebenden Bereich gebildet ist, mit einer Dichtmasse (28) gefüllt wird,
dass in einem zweiten Schritt der Befestiger (12, 12', 24) mit an einer Innenwand der Hülse (19, 29, 49, 59, 69, 89) anliegendem Kopf (15, 15') in die Hülse (19, 29, 49, 59, 69, 89) eingeführt wird, so dass die Hülse (19, 29, 39, 49, 59, 69, 89) mit dem Befestiger (12, 12', 24) eine Art Injektionsspritze bildet, und
dass in einem dritten Schritt der Befestiger (12, 12', 24) gesetzt und dadurch die Dichtmasse (28) auf oder in oder unter das Substrat (16) appliziert bzw. injiziert wird.

17. Verfahren nach Anspruch 16, **dadurch gekennzeichnet, dass** ein Befestiger (12, 12') eingesetzt wird, bei dem der zur Verankerung ausgebildete Schaft (13, 13') mit einem Verankerungsgewinde (14, 14') versehen ist.

18. Verfahren nach Anspruch 16, **dadurch gekennzeichnet, dass** ein Befestiger (24) eingesetzt wird, bei dem der zur Verankerung ausgebildete Schaft (23) wie der Schaft eines Nagels ausgebildet ist.

19. Verfahren nach einem der Ansprüche 16 bis 18, **dadurch gekennzeichnet,**
**dass** vor dem Setzen des Befestigers (12, 12') in dem Substrat (16) eine Sackbohrung (47, 47") mit einem Durchmesser hergestellt wird, der größer als der Außendurchmesser des zur Verankerung ausgebildeten Schaftes (13, 13'), aber kleiner als der Außendurchmesser des substratseitigen Endabschnittes (25, 45') der Hülse (19, 69) ist,
**dass** die Hülse (19, 69) mit dem Ende des substratseitigen Endabschnittes (35, 45') um die Sackbohrung (47, 47") auf das Substrat (16) aufgesetzt wird und
**dass** dann der Befestiger (12, 12') gesetzt und die Dichtmasse (28) in die Sackbohrung (47, 47") injiziert wird.

20. Verfahren nach einem der Ansprüche 16 bis 18, **dadurch gekennzeichnet,**
**dass** vor dem Setzen des Befestigers (12, 12') die Hülse (29, 69) mit dem Ende ihres substratseitigen Endabschnittes (25', 45') auf das Substrat (16) aufgesetzt wird und
**dass** dann der Befestiger (12, 12') gesetzt und die Dichtmasse (28) in einem Bereich zwischen dem substratseitigen Endabschnitt (25', 45') der Hülse (29, 69) und einem benachbarten Bereich des Substrats (16) um den Befestiger (12, 12') herum auf das Substrat (16) appliziert wird.

21. Verfahren nach einem der Ansprüche 16 bis 18, **dadurch gekennzeichnet,**
**dass** vor dem Setzen des Befestigers (12) in dem Substrat (16) eine Sackbohrung (47') mit einem Durchmesser hergestellt wird, der größer als der Außendurchmesser des substratseitigen Endabschnittes (45) der Hülse (39) ist,
**dass** dann die Hülse (39) mit ihrem substratseitigen Endabschnitt (45) so weit in die Sackbohrung (47') eingeführt wird, dass ein Abstand (A) zu dem Grund der Sackbohrung (47') verbleibt, und
**dass** schließlich der Befestiger (12) gesetzt und die Dichtmasse (28) aus einer Öffnung einer Kanüle (27) am Ende des substratseitigen Endabschnittes (45) der Hülse (39) in die Sackbohrung (47') injiziert wird.

22. Verfahren nach einem der Ansprüche 16 bis 18, **dadurch gekennzeichnet,**
**dass** vor dem Setzen des Befestigers (12) in dem Substrat (16) eine Durchgangsbohrung (47'") mit einem Durchmesser hergestellt wird, der wenigstens gleich dem Außendurchmesser des substratseitigen Endabschnittes (45') der Hülse (29) ist,
**dass** die Hülse (29), bei der der substratseitige Endabschnitt (45') ab einer Schulter (46') der Hülse (29) als ein Dübel (48') ausgebildet ist, mit ihrem substratseitigen Endabschnitt (45') in die Durchgangsbohrung (47'") eingeführt wird, bis sie mit der Schulter (46') auf dem Substrat (16) um die Durchgangsbohrung (47'") aufsitzt, und
**dass** dann der Befestiger (12) gesetzt und die Dichtmasse (28) durch wenigstens ein Durchgangsloch (52) in dem Dübel (48') in die Durchgangsbohrung (47") und zwischen den Dübel 48' und das Substrat (16) injiziert wird.

23. Verfahren nach Anspruch 22, **dadurch gekennzeichnet, dass** als Dübel ein Quetschdübel (48') eingesetzt wird, der in einem Bereich, in dem er unterhalb des Substrates (16) zusammenquetschbar ist, mit dem wenigstens einen Durchgangsloch (52) versehen ist..

24. Verfahren nach einem der Ansprüche 16 bis 18, **dadurch gekennzeichnet,**
**dass** vor dem Setzen des Befestigers (12) in dem Substrat (16) eine Sackbohrung (47") mit einem Durchmesser hergestellt wird, der größer als der Außendurchmesser des substratseitigen Endabschnittes (55) der Hülse (49) ist,
**dass** dann die Hülse (49) mit ihrem substratseitigen Endabschnitt (55) so weit in die Sackbohrung (47") eingeführt wird, dass ein Abstand (B) zu dem Grund der Sackbohrung (47") verbleibt, und
**dass** dann der Befestiger (12) gesetzt und die Dichtmasse (28) aus wenigstens einem in einer Seitenwand des substratseitigen Endabschnittes (45) der Hülse (49) gebildeten radialen Durchgangsloch (52) in die Sackbohrung (47") injiziert wird.

25. Verfahren nach Anspruch 20, **dadurch gekennzeichnet, dass** eine Tülle (11') mit einer Hülse (29) eingesetzt wird, die in Bezug auf den Durchmesser des Kopfes (15') des Befestigers (12') so ausgebildet ist, dass bei dem Setzen des Befestigers (12') die Länge der Hülse (29) reduziert wird.

26. Verfahren nach Anspruch 20, **dadurch gekennzeichnet, dass** eine Tülle (11) mit einer Hülse (59) eingesetzt wird, die in Bezug auf den Durchmesser des Kopfes (15) des Befestigers (12) so ausgebildet ist, dass bei dem Setzen des Befestigers (12) der Kopf (15) in der Bohrung der Hülse (59) in Richtung zu dem substratseitigen Ende bewegt wird.

27. Verfahren nach Anspruch 21, **dadurch gekennzeichnet, dass** bei dem Setzen des Befestigers (12) die injizierte Dichtmasse (28) von der Sackbohrung (47") aus in einem Bereich zwischen dem Ende des substratseitigen Endabschnittes (45') der Hülse (49) und einem benachbarten Bereich des Substrats (16) um den Befestiger (12) herum auf das Substrat (16) appliziert wird.
